# EUROPEAN PATENT APPLICATION

(11) **EP 1 726 312 A1**
(43) Date of publication of application: **29.11.2006**
(21) Application number: 05076191.5
(22) Date of filing: 23.05.2005
(51) Int. Cl.: A61K 41/00, A23K 1/00, A23K 1/18, A23L 1/29, A01G 31/00

(54) **Improvements in nutritional value and enhanced agricultural yield by spectral or electromagnetic energy irradiation**

(71) Applicant: Mintiens, Stefan, 2100 Deurne (BE)
(72) Inventor: Mintiens, Stefan, 2100 Deurne (BE)

(57) **Abstract**

The present invention provides novel compositions, methods and systems for raising or treating living organisms. Key element of the invention is upgrading and altering the nutritional and digestive quality of food compositions and feeding preparations by irradiating the same with substance-specific EM spectral information from selected compounds, the latter ones having superior nutritional properties compared with the target feed compositions. Applications in beef cattle fattening, calves raising and furthermore in plant growing. The invention enables the provision of improved food or feed preparations for animals and humans.

## Description

### BACKGROUND OF THE INVENTION

### Field of the invention

The present invention pertains to the field of electro-magneto chemistry of substrates and organisms, particularly to the special subfield related to the determination and captation of substance-specific spectral energetic resp. electromagnetic information, furthermore including the possibilities of storing, amplifying, filtering and transmitting said spectral energy information in digital forms.
More in particular, the present invention is directed to the novel systems of using substance-specific energy information in the areas of nutrition, inclusive the provision of improved nutrient products and enhanced product assimilation or yield resulting from the effective and selective use of substance-specific energy spectra.

### Description of the pior art

The invention is, to some extent, related to homeopathy. Homeopathic medecine works on the principle that very small concentrations of appropriate "natural" drugs may have consequences that far outweigh those expected of them. Traditionally homeopathic drugs are prepared according to a plurality of successive (aqueous) dilutions of natural compounds, down to the level of a few molecules per unit volume or even lower, such that partial preparations derived from extreme dilutions may give rise to solution volumes without containing any real functional molecule. Their effect on the human body is nevertheless attributed to a kind of memory or resonance effect by the mother solution (pure water with initial amount of natural compound), which is assumed to retain and transmit compound-specific properties to the next dilutions and dilution liquids. In this way natural homeopathy is explained as the use of a pattern of oscillations of particular frequencies being copied from the pattern existing in the molecular structure of certain products like herbs, using water as carrying and transmitting agent.
The homeopathic medicine established by Dr. Hahneman has recently been complemented by the developments of Dr. Voll in the field of electro-acupuncture. Thanks to this combination of homeopathy and electro-acupuncture a new therapeutic concept was introduced, namely to replace ingestion of homeopathic drugs by supplying the body with resonance information of the natural homeopathic compound through the intermediate of bio-electrical signals.
Application of this concept in the form of an electro-medical apparatus with plural electrodes is described in international patent application WO 99/26532, which recommends the apparatus for the purpose of medical therapy and diagnosis of different body parts.
In a similar context the Austrian company "Quintsysteme für holopathische Medizin" developed an apparatus and method for registering substance-specific and organism-specific energetic information, see for instance US Patent No. 5830140, and more recently proposed a method and system for registering and reproducing homeopathic information, see US Patent Application publication US 2002/0059247.
In this connection "Quintsysteme" furthermore developed an electronic diagnosis and therapy instrument of holopathy (QuintStation), which utilizes a pulsed magnetic field to transfer healing information directly to specific parts of the body. Skin resistance measurements, interpreted by dedicated software, form the basis of the diagnosis section of the instrument.
On the other hand it is known, especially from reports publised in Eastern Europe and China, that magnetic fields have been advantageously used to treat water. Beneficial effects claimed include reduced formation of boiler scale, accelerated plant growth, desalination of soil, better smell and taste of drinking water, favourable effects on patients with kidney stones etc.
Like the effects reported in homeopathy, the effects reported for magnetically treated water defy scientific explanation and principles.
It is known that electrical fields are associated with biological tissue, see i.a. NMR imaging technique used to visualize electronic effects in biomolecules.
A possible plausible explanation of the effects of magnetically treated water on bio-organisms or other substrates is that the substrate's proper electronic field is efficiently altered such that certain properties of that substrate are thereby modified to an extent to obtain a desired result.
In this connection it has been proposed (see US Patent No. 50.12110) to produce "synthetic" homeopathic agents by introducing synthetic oscillations of differing frequencies, i.e. information or spectral energy of a selected energy level and frequency band, into a substrate which can be used to elicit a desired result in the biological field. The substrates concerned are mainly pharmaceutically acceptable carriers such as natural saline or oils, which are magnetically treated to obtain substrates with synthesized oscillation patterns. Their intended use is healing biological structures, which includes destroying biological agitators.

### SUMMARY OF THE INVENTION

The present invention is based on the surprising finding by the applicant that feeding or growing response of living organisms like animals can be markedly enhanced by supplying them with substance-specific electromagnetic energy information derived from nutriment and herbal compounds.

It is a primary object of the present invention to provide improved nutrient compositions, methods and systems for feeding or raising living organisms.
Another object of the invention is to provide tailored feeding recipes, which allow to meet specific needs related to poor availability of particular nutritious materials, and furthermore to solve special problems associated with food substance-specific intolerance of certain living organisms and also with stress-involved unfit feeding response.
These objects and others are attained, in accordance with the instant invention, by the subject-matter and embodiments of the appended claims.
Further objects and advantages of the invention will become apparent from a consideration of the ensuing description and the drawings.

### DETAILED DESCRIPTION OF THE INVENTION

Figure 1 is a block diagram of a system for improved young cattle feeding.
Figure 2 is a block diagram illustrating the upgrading of liquid baby food.
Figure 3 is a block diagram showing the transmittal and administration of substance-specific electromagnetic information in feeding.

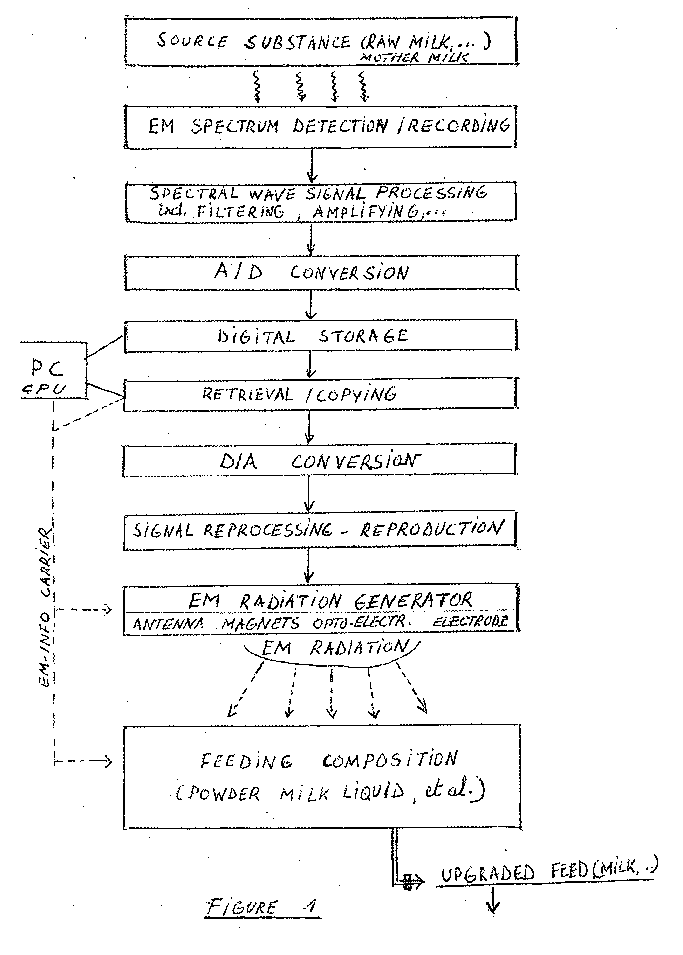

A first embodiment of the invention essentially consists in the provision of a nutrient product or composition featuring an improved quality in the sense of nutritional value and properties, which is obtained by transmitting substance-specific wave energy or spectral information from a recognized high-quality food substance or compound(s) to a known nutrient material of a composition "not" containing said high-quality compounds or substances.
The transmittal of said substance-specific electromagnetic information may be effected by captation, storage and irradiation as disclosed i.a. in the documents US 5830140 and US 5012110, the contents of which are incorporated herein in their entirety. Accordingly, and as depicted in figure 1, the substance-specific electromagnetic spectrum of a high-grade nutrient compound or composition, exemplarily raw milk of a mother cow(s), is captated and stored in a proper condition (electronically filtered and possibly amplified) on an suitable data carrier, preferably in digital form. Said substance-specific EM spectrum, possibly augmented with microwave spectra of other food or herbal material, is then transmitted or retranslated to a desired feeding mix composition, typically a liquid preparation of powder milk for raising calves, by irradiating said EM information with proper spectral power into the feeding mix.
As a result the electromagnetic spectrum of the powder milk feed preparation is altered by absorption and exhibits spectral properties of the mother cow milk, although the molecular and chemical properties of the irradiated feed preparation remain unchanged.
The calves fed with EM-upgraded powder milk will grow better and suffer less from digestion problems compared with calves industrially raised on common powder milk.

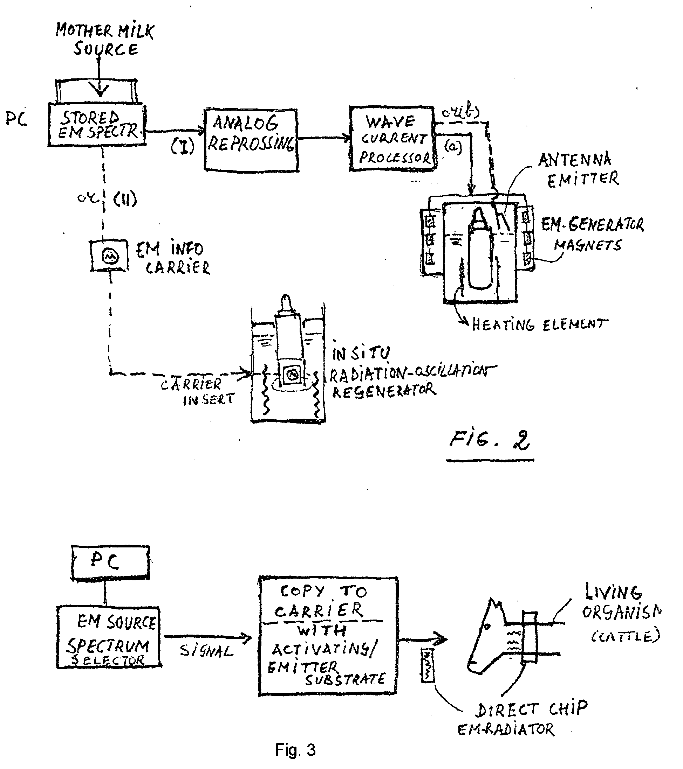

A second embodiment of the invention is illustrated in figure 2. In this case the aimed improvement concerns optimised baby food and feeding of human babies. It is generally known and scientifically confirmed that mother milk is by far the best nutrition for babies. Unfortunataly, modern times and other factors (deficiencies in third world) prevent the implementation of this healthy principle, such that milk feeding is now based on powder milk originating from cows and also from soy. However, a lot of babies suffer from intolerance towards cow milk and have to rely on soy milk and other prepatations.

In this connection the present invention proposes the improvement of transmitting mother milk-specific spectral wave energy, preferably from the own mother if possible and medically reliable, to a natural or a synthetic milk liquid preparation. In this way babies can be fed without risk of digestive and other intolerance, and at the same time benefit from certain intrinsic health-promoting properties of true mother milk. In a practical configuration the feeding bottle with baby milk can be heated in a heater device which is also equipped with a means for irradiating the mother-milk EM spectrum into the bottle liquid.
Said specific EM-spectrum, properly captated and stored in digital form, e.g. on a hard disc of a PC, could then be read out and regenerated in spectral energy form and retransmitted with suitable magnetic or electromagnetic emitter means for irradiating the desired wave spectrum into the baby milk.

In a similar way the invention offers the possibility of upgrading the quality of energy drinks for the sports sector, e.g. the enhance the digestive and nutritional effects. Another important purpose of irradiating substance-specific spectral energy into an energy drink is controlling the effect of lactic acid on the muscles. First tests in this connection have demonstrated that level and production rate of lactic acid in the blood stream can be lowered to a significant extent.

Another embodiment of the invention concerns the growing/fattening of cattle. It is generally known that optimum conditions of feeding, digestion and the absence of stress are important factors in attaining good yield and superior meat quality of beef cattle. A major problem with female cattle, more often fattened and assembling in restricted spaces of a cowshed, is the recurring rut of heat period. As a result the rutting female animals may become very restless and agitated, even injuring each other, which has a deleterious effect on fattening yield and meat quality.
The applicant being aware of the problem has been able to find a solution by proposing an electromagnetically enhanced feeding diet. Accordingly, the present invention provides a direct, an indirect or a combineed EM recipe for raising cattle.
In a first alternative the cattle is regularly fed with a feed composition which at least in part has been updraded by irradiation with a EM spectrum of selected plant, herb or other organic substances, eventually supplemented with spectral energy information from minerals. The administered upgraded feed may be in the solid or liquid form.
In a second alternative, the cattle is provided with a dietary EM information recipe which is not ingested via the digestive tract but is applied to the tissue of the cattle head. In this mode of the invention the EM spectrum of selected substances (plants, herbs, minerals, etc., ...) is registered on an information carrier capable of releasing EM oscillation or radiation into the living organisme of the animal. For this purpose an activatable magnetic chip or foil is affixed to the cattle head, neck or other suitable spot and providdes the animal tissue constantly or intermittently with selected EM information of suitable spectral power.
In another mode the direct ingestion of EM-upgraded cattle feed may be combined with the external release of EM information into the cattle tissue.
Pilot tests have been carried out and it has been empirically confirmed that the so fed and treated cattle are much less subjected to the side affects of their rut period and present a relaxed eating behaviour. Furthermore it became apparent that beef production and quality increased in a significant way.

In a similar manner the invention may be applied in plant and vegetable growing. In this case at least part of the irrigation water and/or aqueous feed solution (cf. hydroculture) applied to the plants comprises liquid portions treated with EM information of selected organic and/or mineral substances.

In connection with the above described embodiments and the related process sequences according to figures 1-3, it should be understood that the procedural schemes shown there are intended to illustrate some possible modes of carrying out the invention, without being limitative with respect to the mentioned or involved hardware, software and auxiliary devices or components for practicing the invention. In this connection the expert is referred to the state of the art of EM spectra captation, signal processing, data storage, transmission and reproduction/irradiation as already mentioned hereinabove and also to US patent 5481196. Further it is referred to the specific technical fields of data carriers, EM radiation devices and wave or oscillation generators.
Additional information on specific device elemtns, such as Quintbox and Quintstation, are available from the firm "Quintsystem", who developed diagnosis and therapeutic devices for the medical field of homeopathy and holopathy.

Furthermore, it is to be understood that the particular feeding materials, methods and systems disclosed, and the EM procedures set forth, are presented for purposes of explanation and illustration and that various equivalents can be used and modifications of said procedures can be made without departing from the invention as defined in the appended claims.

## Claims

1. Method of upgrading the quality of food materials and feed compositions comprising the steps of:
providing a target food material or feeding composition A, selecting a source substance or composition B and optionally a related further source compound(s) B* having particular nutritional value properties and being different from A, detecting/registering the substance-specific EM spectrum of source B (B*), and retranslating the EM spectrum of said source B to food composition A by irradiating spectrum B into target A, wherein said substance(s) or composition(s) A and B (B*) may be present in the solid form, the liquid form or comprise a mixture of solids and liquids.

2. A method according to claim 1, wherein the further source compounds B* are selected from plant material, herb material, mineral material, metal compounds and orthomolecular compounds, and mixtures thereof.

3. A method according to claim 1, wherein the target composition A is a solution or emulsion of powder milk, either from animal or vegetable origin, and wherein the source composition B is selected from mother cow milk or from human mother milk.

4. An upgraded food product or composition A obtained by the method of claims 1 to 3, said composition or product being **characterized by** comprising an irradiated EM spectrum of one or more nutritional substances (B, B*) differing from the substance(s) comprised in A.

5. An upgraded feeding composition according to claim 4, wherein said composition is selected from powder milk, cow milk or soy milk preferably upgraded with mother milk, beverages for human consumption, sports type energy drinks, and aqueous feeding liquids for plant and animal raising.

6. Method of growing living organisms, comprising the use of feeding compositions according to claims 4 or 5.

7. System for growing or treating living organisms, comprising at least the combination of a read-out memory element storing the EM spectrum of a selected substance in digital form, a mobile information carrier adapted to receive said EM spectral information and means for transmitting by irradiation said spectral information to a selected feeding composition for said living organism and/or directly to sais organism.

8. System according to claim 8, adapted for fattening beef cattle or other meat-producing animals such as porc and the like, wherein the EM informatinon carrier substrate comprises a magnet or similar wave, oscilliation or field generating element, said element being preferably shaped as a platelet, film, foil or chip, whereby in use said element is affixed to a body portion of said animal and directly provides the animal tissue with EM radiation or oscilliaton of adjustable spectral power and frequency corresponding with the EM spectrum of said selected substance.

9. Method of growing or treating living organisms, comprising the use of a system according to claims 8 or 9.
